# EUROPEAN PATENT APPLICATION

(11) **EP 1 216 973 A1**
(43) Date of publication of application: **26.06.2002**
(21) Application number: 00128501.4
(22) Date of filing: 27.12.2000
(51) Int. Cl.: C04B 26/10

(54) **Flooring structure and its manufacturing process**

(30) Priority: 20.12.2000 IT MI202766
(71) Applicant: TTS TOTAL TECHNOLOGY SERVICE S.R.L., 24129 Bergamo (IT)
(72) Inventor: Oreda, Flavio, 24126 Bergamo (IT)
(74) Representative: Cicogna, Franco

(57) **Abstract**

A flooring structure characterized by the fact of having one granular component included in one hardening component.

The manufacturing process of a flooring structure is caharacterized by the fact of including the following phases: to mix a mixture of one granular component with one hardening resin and possibly another hardener; and to lay the mixture on one plan to be covered with the flooring.

## Description

### BACKGROUND OF THE INVENTION

### 1. Field of the Invention

The subject of the present invention is a flooring structure and its manufacturing process.

### 2. Description of the related Art

There are many flooring known as suitable to be laid on a bed, that is laid , well leveled on the structured to be floored, and that usually is composed by sand and cement mortar or cement lime mortar.

Floorings can be homogeneous, or slabs or tiles.

The homogeneous flooring are obtained by laying on the bed a coating paste that, after setting and hardening, gives a continuous and uniform surface which will be divided into slabs and then smoothed.

Elements or tiles flooring differ from the homogeneous ones because the are not prepared in the yard, but delivered from the factories in pieces ready to be posed.

Task of the present invention is to make a flooring structure, homogeneous or in tiles, and a manufacturing process, whose laying should be fast and easy.

Within this task, one scope of the invention is to make a flooring structure that can offer higher technical and esthetical characteristics.

### SUMMARY OF THE INVENTION

A further scope of this invention is to make a flooring structure which is particularly long lasting and resistant to the impacts, caused for example by the falling off of objects.

These and other scopes, which will be better explained hereafter, are attained by a flooring structure characterized by one granular component included in a hardening resin.

These and other scopes, which will be better underlined hereafter, are attained by a manufacturing process of the flooring structure, characterized by the following phases: to mix a composed of granular component with a hardening resin, and possibly one hardener; to lay the mixture on a surface which has to be covered with flooring.

Further characteristics and advantages of the object of the present invention will be better underlined through the analysis of the description of the preferred but not exclusive manufacturing process of the invention.

According to the invention, the flooring structure is made by mixing a mixture of one granular component with an hardening resin and possibly one hardener.

The granular component of the mixture can be composed by a variety of materials, according to the desired esthetical and mechanical effect.

For example the granular component can be composed of crushed stones, quarz and other materials also coming from machine shop rejection.

For example, properly minced chips can be used, which are able to give a particular look to the final product.

The hardening resin used for the mixture can be profitably chosen among the epoxy resins.

Besides giving a excellent esthetical effect, thanks to their gloss and transparency, these resins offer characteristics of high mechanical resistance and resistance to high temperature and to chemical agents.

After hardening, the flooring surface is covered with a layer of epoxy resins, in order to make the epoxy surface perfectly smooth and uniform.

The resin including the granular component can be added with colors or the color can be included in external resin surface layer.

According to the invention the flooring can be prepared mixing the components directly in the place where it has to be laid off, using a common mixer.

According to the invention it is also possible to realize paving and floor tiles, which can be applied as the traditional tiles.

To reduce the flooring costs, or to attain different technical or and/or esthetical characteristics , epoxy resins can be replaced by other resins, for example urea, melamine or polyurethane resins.

It is also possible to use combinations of resins, for example using resins of lower cost and lower technical characteristics and for the mixture, and a resin with higher technical characteristics , for example an epoxy resin, for the surface layer.

It has been practically verified that the invention complies with the fixed tasks and scopes, by making a flooring structure extremely advantageous, from the point of view of a fast and easy posing.

One important advantage is the fact that, in order to make the flooring structure according to the invention, the floor foundation must not be leveled, since the mixture of resin and granular component adapts itself to the lower surface.

Another important advantage of the flooring structure, according to the invention, is its resistance to the impacts, given by its resilience characteristics.

Furthermore the resilience characteristics of the hardening resins and their low contraction factor allow to make wide areas without the need to split them in large slabs, as for the traditional floorings.

Of course the materials used, as well as the dimensions of products can be anyone, according to the needs and the state of the technique.

## Claims

1. Flooring structure-**characterized by** the fact of having one granular component included in one hardening component.

2. Structure, according to the claim 1, **characterized by** the fact that the named granular component is composed by one or more materials , including stones, quarz, chips.

3. Structure, according to the claims 1 and 2 **characterized by** the fact that the hardening resin is an epoxy one.

4. Structure, according to the claims 1 and 2 **characterized by** the fact that the hardening resin is an urea resin.

5. Structure, according to the claims 1 and 2 **characterized by** the fact that the hardening resin is a melamine resin.

6. Structure, according to the claims 1 and 2 **characterized by** the fact that the hardening resin is a polyurethane.

7. Structure, according one or more of the above claims, **characterized by** the fact of having a thickness between about 7 and 15 mm.

8. Manufacturing process for a flooring structure **characterized by** the fact of including the following phases:
To mix a mixture of one granular component with one hardening resin and possibly another hardener;
to lay the mixture on one plan to be covered with the flooring

9. Manufacturing process of a flooring structure **characterized by** the fact including one further leveling phase of the mixture.

10. Manufacturing process of a flooring structure **characterized by** the fact of including one further phase after the hardening of the resin that makes the basic product, which consists of varnishing the flooring surface with polyester resin. Melamine resin, polyurethane resin, or epoxy resin.

11. Manufacturing process of a flooring structure **characterized by** the fact of one or more of the described and/or explained characteristics.

12. Structure, according one or more of the before listed claims, **characterized by** the fact of including one or more of the described/and or explained characteristics.
